# EUROPEAN PATENT APPLICATION

(11) **EP 0 823 368 A1**
(43) Date of publication of application: **11.02.1998**
(21) Application number: 96830449.3
(22) Date of filing: 07.08.1996
(51) Int. Cl.: B62D 53/06, B62D 53/08, B62D 25/20, B62D 29/00

(54) **An integrated structure for vehicles, in particular for industrial vehicles, such as trailers, semitrailers and similar**

(71) Applicant: Menci & C. S.p.A., 52043 Castiglion Fiorentino (Arezzo) (IT)
(72) Inventor: Menci, Santi, 52043 Castiglion Fiorentino (Arezzo) (IT)
(74) Representative: Lanzoni, Luciano

(57) **Abstract**

The integrated structure for vehicles, in particular for industrial vehicles, such as trailers, semitrailers and similar, includes a plurality of modular box-shaped elements. The surface of each box-shaped element (5,6,7,8,100) designed to face the adjacent box-shaped element (5,6,7,8,100) having connecting means (10), said means being designed to connect the elements substantially on the same plane, so as to create a self-bearing structure. The thickness of the structure is reduced at the area (11) for connection to the tractor, so as to increase the working height for the load and at the same time, is particularly resistant, which means that it can house the connector pin (1) and bear the stress transmitted through the connection to the tractor.

## Description

The present invention relates to an integrated structure for vehicles, in particular for industrial vehicles, such as trailers, semitrailers and similar.

The present invention is particularly useful in the sector of so-called flat-bed semitrailers.

In flat-bed vehicles, the structure which bears the load and resists the static and dynamic stress arising from the various road conditions is the only structure located beneath the loading surface of the vehicle.

In fact, in these types of vehicles there are no structural elements above the load, since the cover, if any, consists of hoops and a waterproof canvas, which serves only as a cover and has no structural function.

Traditionally, the structure of these vehicles was made by separating the carrying function from the load-supporting function.

The carrying structure is made from a steel frame consisting of longitudinal members and transverse members.

The load-supporting structure is made from a metallic or wooden surface which rests upon the side and transverse members and does not contribute to the frame structure. The axles and other necessary devices, such as supporting legs, braking system, etc. are fixed beneath the longitudinal members.

When, years ago, there was a changeover from construction using steel to that using light alloys, the construction model for the structure remained substantially unchanged. In particular, the separation of the carrying function from the load-supporting function remained.

Although the change to light alloys brought advantages such as lighter structures with greater resistance to corrosion, it also created new problems.

Firstly, the reduced mechanical resistance of light alloy structures compared to those made of steel meant that the thickness of the material used had to be increased. Moreover, when the light alloy is welded, its mechanical resistance is further reduced, so that the structure must be made even thicker.

As a result, the overall dimensions of the light alloy structures are significantly greater than those of the steel structures.

The problem of the overall dimensions is particularly serious for semitrailers at the zone for connection to the tractor vehicle. In fact, given that the height of the thrust bearing connector of the tractor is a standard value, the height of the loading surface of the semitrailer may not be below a given height, which must be above that of the tractor thrust bearing.

Since even the height of the load is limited by national and international road traffic legislation, the working height of the load is influenced by the thickness of the semitrailer frame-support assembly at the zone for connection to the tractor.

In other words, to increase the working space for the load, it is necessary to reduce the thickness of the semitrailer structure at the connector pin zone.

Patent EP-B-0 439 409 presents a solution for the reduction of the thickness at the connector pin zone, maintaining the traditional semitrailer structure, of the type with longitudinal and transverse members.

However, the light alloy frame structure, made according to the conventional model, does not allow the thickness of the said part of the semitrailer to be reduced beyond given values.

Moreover, significant technological problems arise in the production of the conventional-type structure.

In fact, the structure of the type having a flat-bed with rectangular links is made from longitudinal elements which resist the longitudinal bending moment and transverse members fixed to these longitudinal members by means of holes and welding, so as to bear the stress on the vertical and transversal plane.

Production of such a structure requires a series of processes, such as:
- machining to make holes in the longitudinal members for the passage of the transverse members,
- positioning of the transverse members on the longitudinal members,
- positioning of the side bands which restrain the transverse members,
- welding of the transverse members to the longitudinal members and welding of the side bands to the transverse members.

Such processing is difficult, especially if precision dimensions must be obtained, and expensive because it is time-consuming.

The aim of the present invention is to eliminate the afore-mentioned disadvantages.

According to the specifications in the annexed claims, the present invention resolves the problem of creating an integrated self-bearing structure which is modular, of simple construction, rigid and of limited thickness at the zone for connection to the tractor.

The advantages obtained with the present invention basically consist in the fact that an integrated structure for vehicles is obtained, in particular for industrial vehicles, such as trailers, semitrailers and similar, having a reduced thickness at the zone for connection to the tractor, so as to increase the working height of the load, at the same time being resistant, so that it can house the connector pin and bear the stress transmitted through the connector.

A further advantage of the present invention is the obtaining of a structure which is generally more rigid and lighter than the conventional structures.

Another advantage of the present invention is the obtaining of a structure whose production cycle is simpler and more economical than that of the conventional structures.

The present invention is described below with reference to the accompanying drawings, which illustrate a preferred embodiment, and in which:
- figure 1 is a side view of a semitrailer made according to the present invention;
- figure 2 is a side view of an alternative embodiment of a semitrailer;
- figure 3 is a cross-section along the line A-A of the semitrailers illustrated in figures 1 and 2;
- figure 4 is an axonometric view of the zone for connection of the semitrailer to the tractor;
- figures 5, 6, 7, 8, 9, 10 show variations of the connecting zone for two box-shaped elements;
- figure 11 is a cross-section of a sheet steel box-shaped element;
- figure 12 is a cross-section of the zone for connection of the semitrailer to the tractor in an alternative embodiment.

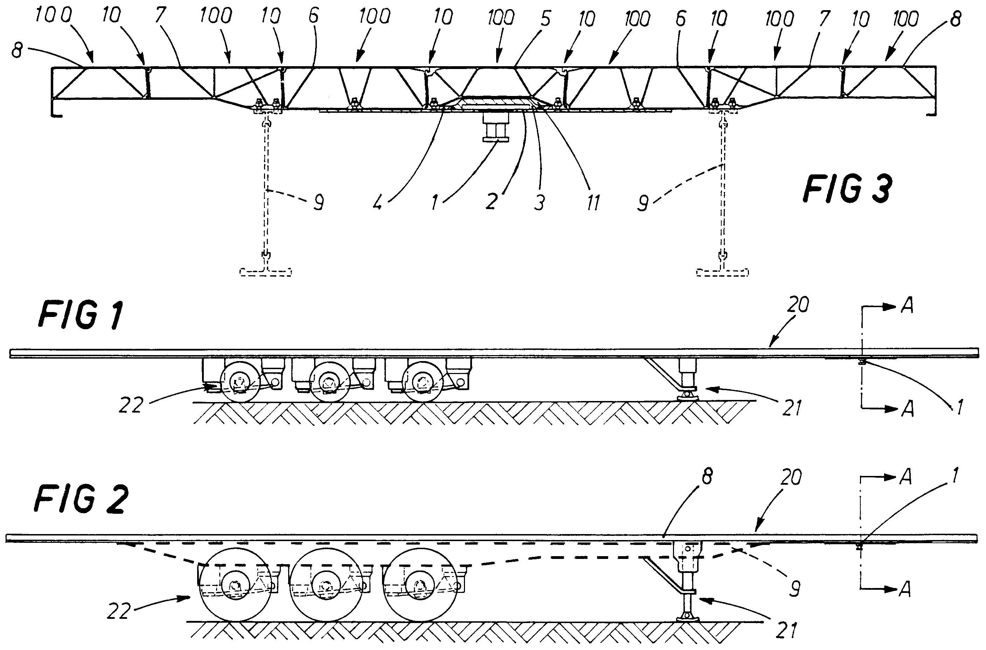

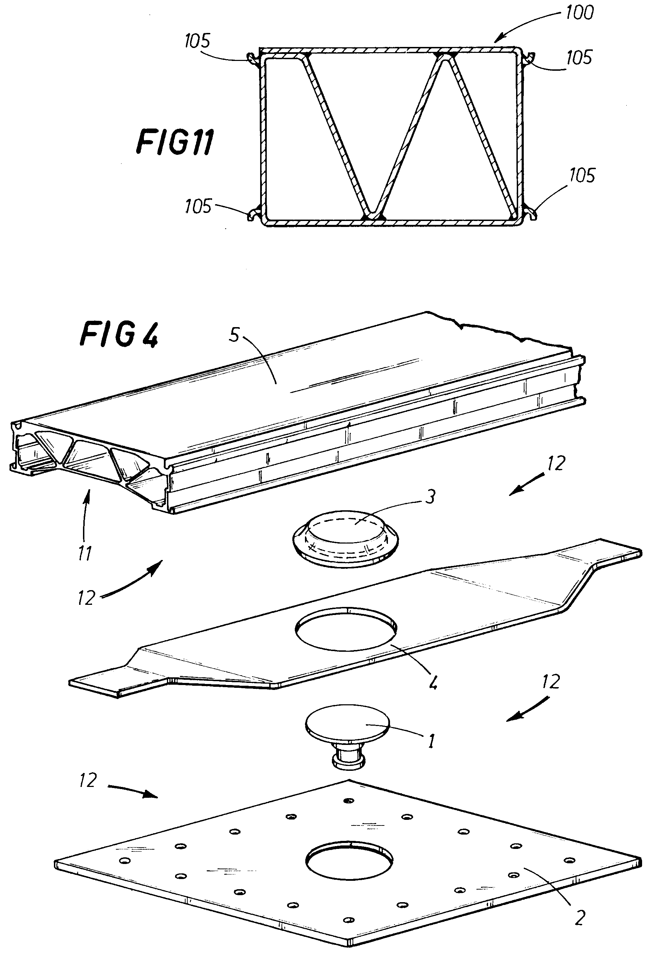

Figure 1 is a side view of a semitrailer made according to the present invention. The semitrailer basically consists of a flat-bed 20, a set of wheels 22 and two supporting legs 21 which may be fixed directly to the flat-bed 20, or to an auxiliary frame 9 which is, in turn, fixed to the flat-bed 20. In the alternative embodiment shown in figure 2, the auxiliary frame 9 basically consists of a pair of longitudinal members with double T cross-section. Figure 3 shows a cross-section along the line A-A, of both the embodiment illustrated in figure 1 and that illustrated in figure 2, in the latter case, the auxiliary frame 9 being shown by a dashed line.

The auxiliary frame 9 is not only a ready-fitted unit which facilitates the assembly of the semitrailer, but, in some cases, may also act as a structural aid.

As shown in figure 2 and partly also in figures 5 to 10, the flat-bed 20 consists of a series of box-shaped elements 5, 6, 7, 8, 100, positioned symmetrically on either side of a central box-shaped element 5. The sides of the box-shaped elements 5, 6, 7, 8, 100 are fixed to one another by connecting means 10, so as to form a self-bearing structure with a substantially flat upper surface.

The box-shaped elements 5, 6, 7, 8, 100 are modules which may be added, changed or substituted with other elements (or modules) of different sizes, to obtain for example, the various widths necessary for the semitrailer. With reference to figure 3, the central element 5 and side elements 8 may remain unchanged, whilst the middle elements 6, 7 may have different widths. Alternatively, one of the elements 6, 7 may be eliminated, or one or more middle elements may be added until the desired width of the flat-bed 20 is obtained.

Moreover, the elements 5, 6, 7, 8, 100 can also be fitted together along the length of the semitrailer, using connecting means 10 similar to those used for side connections. It is, therefore very easy to vary even the length of the flat-bed 20.

Figures 5 to 10 illustrate various examples of the said connecting means 10.

In the embodiment shown in figure 5, the two box-shaped elements to be joined together are labelled 100. Each box-shaped element 100 has a side wall 120, at the top of which there is a tab 101 and upper groove which match a respective tab 101 and upper groove present in the side wall 120 of the adjacent box-shaped element. The bottom of the side walls 120 of the box-shaped elements 100 have similar tabs 102 and matching grooves.

In this embodiment the tabs 101, 102 and the relative grooves form a rigid connection, without play, between the box-shaped elements 100.

To definitively lock the connection 10, the side wall 120 of each element 100 has a projection 103.

The two projections 103 of the two facing elements 100 are made in such a way that during assembly of the two elements 100, which is carried out by means of a vertical movement, the flexibility of the side wall 120 and the angled surface of the projection 103 overcomes a step 104.

Together with the tabs 101, 102, the two steps 104 present in the side wall 120 prevent any further vertical movement of the two elements 100, thus definitively locking the two box-shaped elements 100.

Thanks to the suitable design of the joining elements (101, 102, 103, 104), the connection obtained in this way allows the creation of a joint with specifications similar to those of a welded joint, without the defects caused by heating the material during the welding process.

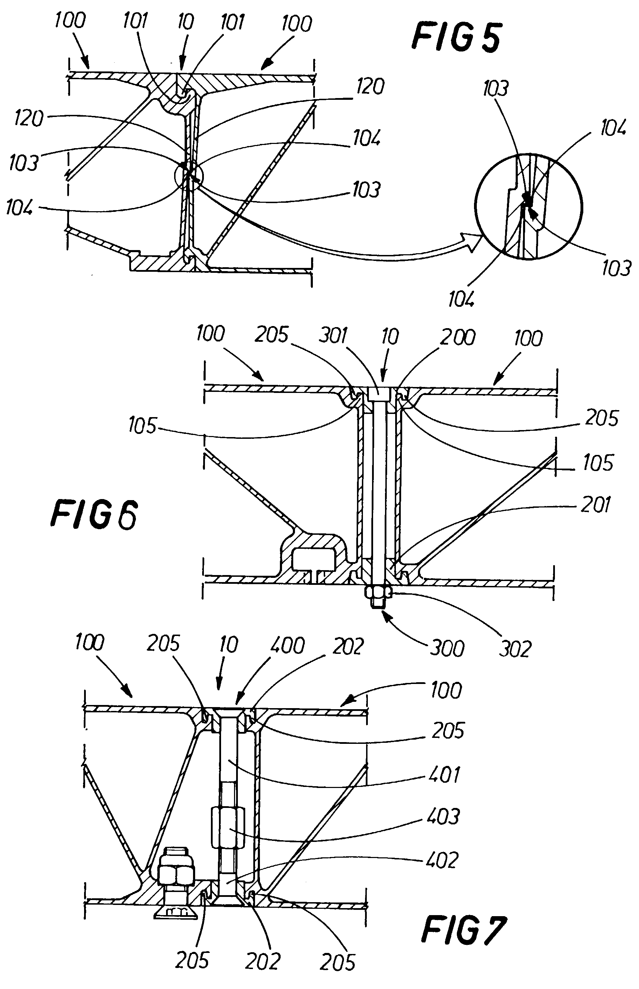

In the embodiments illustrated in figures 6 and 7, there is a groove 105 at the top of the side surface of the two box-shaped elements 100. The bottom of the box-shaped elements 100 has grooves identical to the grooves 105 present at the top.

In the embodiment illustrated in figure 6, two sections 200, 201 are inserted between the top and bottom of the two box-shaped elements 100, said sections having tabs 205 which match and are designed to fit into the grooves 105 in the box-shaped elements 100.

A set of bolts 300, 400 is envisaged for fixing the two sections 200 to the box-shaped elements 100.

The bolts consist of a screw 301 and a nut 302. The head of the screw 301 is sunk in the upper section 200, while the nut 302 remains outside the section 201.

In the case of figure 7, the bolts consist of two screws 401, 402 and an internal nut 403. The heads of the screws 401, 402 are sunk in special seats made in the upper and lower sections 202. The nut 403 which remains inside connects both of the screws 401, 402. Again, by tightening the bolts 300, 400, the joint is definitively locked, obtaining specifications similar to those of a welded joint.

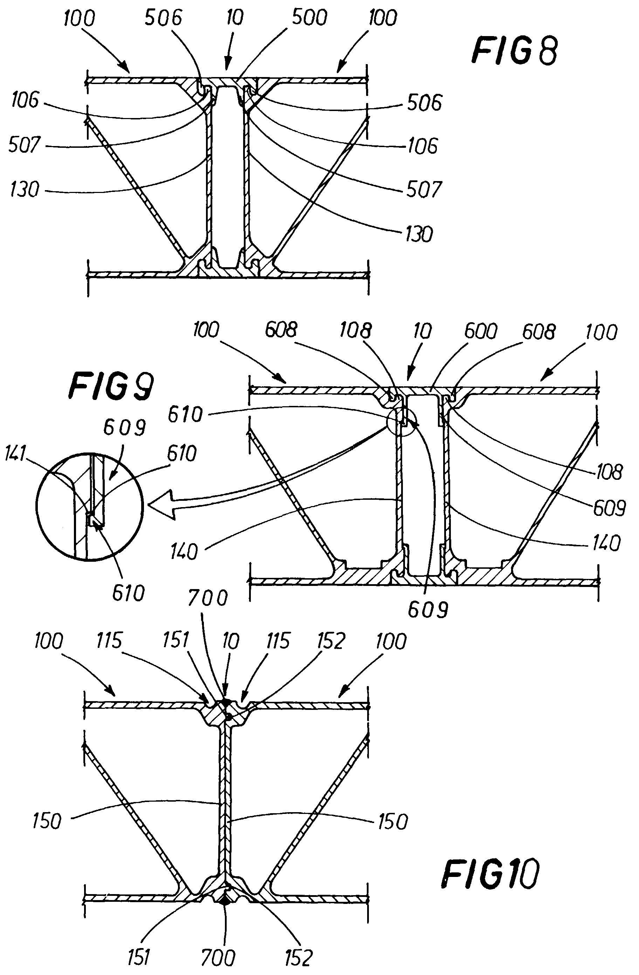

Even in the embodiments illustrated in figures 8 and 9, two sections 500, 600 are inserted at the top and bottom, the sections having tabs 506, 608 which match and fit into the grooves 106, 108 in the box-shaped elements 100.

In the case of figure 8, the joint is locked by forcing the sections 500 with tabs 507 into the space between the side walls 130 of the box-shaped elements 100, forming an interference fit between them.

In the case in figure 9, the sections 600 are inserted with the tabs 609 in the space between the side walls 140. The ends of the tabs 609 have a projection 610 which fits into a special seat 141 in the side wall 140. The section 600 is inserted thanks to the flexibility of the tabs 609 which bend slightly inwards as they enter the space between the two walls 140.

In the embodiment illustrated in figure 10, the connecting means 10 include two projections 151 and relative matching seats 152, made to allow a given amount of play, and located at the top and bottom of the side surface 150 of the box-shaped elements 100. The projections 151 and seats 152 hold the two box-shaped elements 100 in the relative position, whilst the box-shaped elements 100 are definitively locked together by a longitudinal weld line 700 located between two longitudinal grooves 115 in the box-shaped elements 100.

The grooves 115 allow for the expansion of the portions of the box-shaped elements 100 which are welded. In this way, the box-shaped elements 100 do not warp or buckle after being welded. It should also be noticed that, although this embodiment requires welding, which complicates the production cycle, the said welding is only carried out on the flat top and bottom surfaces of the flat-bed 20.

The welds 700 are, therefore, easily applied, even by automatic devices, and so are still advantageous in the production of the flat-bed 20 compared to the conventional construction with welded frame consisting of longitudinal and transverse members.

In an alternative embodiment, the weld 700 may be substituted by gluing with suitable adhesives. In this case, the adhesive may even be applied to the side walls 150 and in the area around the projections 151. For an improved adhesive effect, these areas allow for a given amount of play, in which the adhesive may be inserted.

Figure 4 illustrates the connecting and support means 12 for connection of the semitrailer to the tractor.

The connecting and support means 12 include a plate 4 in the shape of an elongated rectangle which is inserted by partially forcing it into the longitudinal seat 11 in the central box-shaped element 5.

The plate 4 is, in turn, attached to the connector pin 1 by a disc-shaped element 3, then the plate 4 is locked to the box-shaped element 5 in the seat 11 by a plate 2 which is screwed onto the bottom of the box-shaped element 5 and, if necessary, to the adjacent box-shaped elements 6.

Since it is forced into the seat 11, the plate 4 helps to bear the bending stress of the flat-bed 20. In fact, resting on the tractor by means of the pin 1, the upper part of this section of the flat-bed 20 is taught, whilst the lower part, where the plate 4 is located, is compressed.

Therefore, the plate 4 helps to resist the compression stress, which could not be born by any other structural element in the area around the seat 11, since the material of the central box-shaped element 5 is not present.

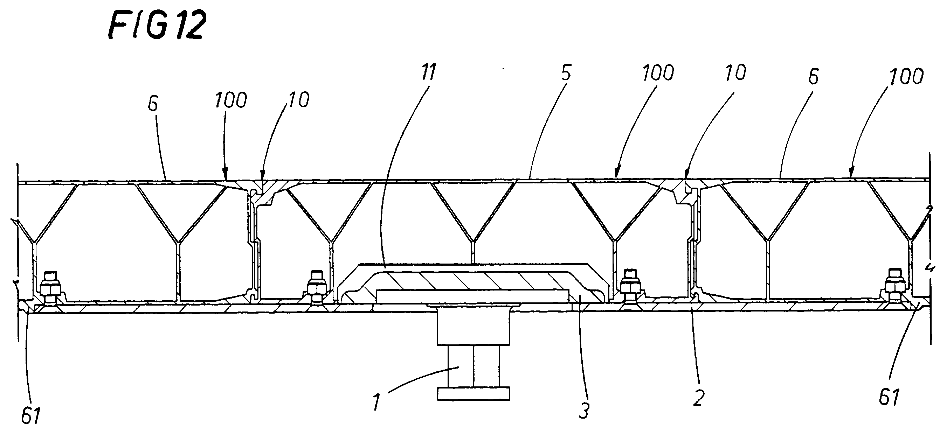

In an alternative embodiment, illustrated in figure 12, the pin 1 is fixed to the plate 2 by the disc-shaped element 3 and the element 4 is eliminated.

The size of the seat 11 is slightly greater, allowing it to house the disc-shaped element 3. The plate 2 not only locks the pin 1, but also contributes to the structure which bears compression stress. The screws which lock the plate to the box-shaped element 5 and to the adjacent box-shaped elements 6 transmit the compression stress by shearing. Alternatively, as illustrated in figure 12, at the edges of the plate 2, on the box-shaped elements in question, in this case the box-shaped elements 6, two projections 61 are envisaged which transmit compression stress to the plate.

The box-shaped elements may be made of various materials.

According to the embodiment illustrated in the accompanying drawings, the box-shaped elements 5, 6, 7, 8, 100 are made of a light alloy, more specifically, extruded aluminium. The good possibilities for the extrusion of light alloys means that even complex forms can be obtained economically. Moreover, the extruded form adapts very well to the creation of box-shapes with a self-bearing function.

In another embodiment, illustrated in figure 11, the box-shaped elements are made of steel. Since it is normally difficult to extrude steel, in this case, the embodiment envisages the use of sheet steel which is bent and fixed together so as to form a closed reticulated structure.

## Claims

1. An integrated structure for vehicles, in particular for industrial vehicles, such as trailers, semitrailers and similar, characterised in that it includes a plurality of modular box-shaped elements (5, 6, 7, 8, 100), having a greater length than thickness and width, the surface of the box-shaped elements (5, 6, 7, 8, 100) designed to face the adjacent element (5, 6, 7, 8, 100) having connecting means (10), said means being designed to connect the elements substantially on the same plane and in such a way that they form a self-bearing structure.

2. The structure according to claim 1, characterised in that the modular box-shaped elements (5, 6, 7, 8, 100) have an internal reticulated structure.

3. The structure according to claim 1 or 2, characterised in that the modular box-shaped elements (5, 6, 7, 8, 100) are positioned symmetrically on each side of a centrally positioned box-shaped element (5) along the longitudinal axis of the vehicle.

4. The structure according to claim 3, characterised in that the lower surface of the central box-shaped element (5) has a seat (11) which is positioned and shaped so as to house the connecting and support means (12) for a pin (1) for connection to the thrust bearing of a tractor.

5. The structure according to claim 4, characterised in that the cross-section of the seat (11) is substantially trapezoidal and is positioned longitudinal to the direction of forward movement of the vehicle.

6. The structure according to claim 5, characterised in that the connecting and support means (12) include a plate (4), the plate having the shape of an elongated rectangle and being designed for insertion by partially forcing it into the longitudinal seat (11) in the central box-shaped element (5), said plate (4) being connected to the connector pin (1) by a disc-shaped element (3), the plate (4) being locked to the box-shaped element (5) in the seat (11) by a plate (2).

7. The structure according to claims 1 and 2, characterised in that the connecting means (10) include two tabs (101, 102) on the side walls (120) of the box-shaped elements (100), the tabs (101, 102) being designed to match and interact with one another, and including two projections (103, 104) on the side walls (120) of the box-shaped elements (100), said projections (103, 104) being flexible and made in such a way that they prevent separation of the box-shaped elements (100).

8. The structure according to claims 1 and 2, characterised in that the connecting means (10) include two sections (200), top and bottom, each section (200) having two tabs (205), said tabs being designed to interact with respective tabs (105) made on the side surfaces of the box-shaped elements (100) to be joined together, and including a set of bolts (300, 400), said bolts being designed to fix the sections (200) to the box-shaped elements (100), creating a rigid connection between the box-shaped elements (100).

9. The structure according to claims 1 and 2, characterised in that the connecting means (10) include at least one projection and a matching seat (151, 152), these being made allowing a given amount of play on the side walls (150) of the box-shaped elements (100), and at least one longitudinal weld line (700), said line being between two longitudinal grooves (115) made in the box-shaped elements (100), the grooves (115) allowing for the discharge of any stress arising from welding.

10. The structure according to claims 1 and 2, characterised in that the connecting means (10) are made by gluing.

11. The structure according to claims 1 and 2, characterised in that the connecting means (10) are made by forcing parts (506, 106, 507, 130) into place together, forming an interference fit between them.

12. The structure according to claims 1 and 2, characterised in that the connecting means (10) include two sections (500), top and bottom, each section (500) having two tabs (506), said tabs being designed to interact with two respective tabs (106) made on the side surface of the box-shaped elements (100) to be joined together, and two tabs (507) which are forced into the space between the side surfaces (130) of the box-shaped elements (100) to be joined together, forming an interference fit between them.

13. The structure according to claims 1 and 2, characterised in that the connecting means (10) are made by means of a connection with flexible hook locking (141, 609, 610).

14. The structure as described in claims 1 and 2, characterised in that the connecting means (10) are made by combining a connection with flexible hook locking (141, 609, 610) and an interference fit (108, 608).

15. The structure according to claims 1 and 2, characterised in that the connecting means (10) include two sections (600), top and bottom, each section (600) having two tabs (608), said tabs being designed to interact with two respective tabs (108) made on the side surface (140) of the box-shaped elements (100) to be joined together, and two tabs (609), each having a projection (610) designed to fit flexibly into a special matching seat (141) made in the side surface (140) of the box-shaped elements (100).

16. The structure according to claims 1 to 15, characterised in that the box-shaped elements (5, 6, 7, 8, 100) are made of an extruded light alloy.

17. The structure according to claims 1 to 15, characterised in that the box-shaped elements (5, 6, 7, 8, 100) are made of extruded aluminium.

18. The structure according to claims 1 to 15, characterised in that the box-shaped elements (5, 6, 7, 8, 100) consist of sheet metal which is bent and fixed so as to form a closed reticulated structure.
